(19) Europäisches Patentamt
European Patent Office
Office européen des brevets

(11) **EP 4 123 036 A1**

(12) **EUROPEAN PATENT APPLICATION**
published in accordance with Art. 153(4) EPC

(43) Date of publication:
**25.01.2023 Bulletin 2023/04**

(21) Application number: **21771278.5**

(22) Date of filing: **10.02.2021**

(51) International Patent Classification (IPC):
**C21B 5/00** (2006.01)     **G05B 19/418** (2006.01)
**G06Q 50/04** (2012.01)     **G06N 99/00** (2019.01)

(52) Cooperative Patent Classification (CPC):
**C21B 5/00; G05B 19/418; G06N 99/00;
G06Q 50/04;** Y02P 90/02; Y02P 90/30

(86) International application number:
**PCT/JP2021/005083**

(87) International publication number:
**WO 2021/186963 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.03.2020 JP 2020044966**

(71) Applicant: **JFE Steel Corporation
Tokyo 100-0011 (JP)**

(72) Inventors:
• **KUMANO, Akira
Tokyo 100-0011 (JP)**
• **TATARA, Reo
Tokyo 100-0011 (JP)**

(74) Representative: **Grünecker Patent- und
Rechtsanwälte
PartG mbB
Leopoldstraße 4
80802 München (DE)**

(54) **BLENDING PLAN CREATION METHOD, BLENDING PLAN CREATION DEVICE, AND OPERATION METHOD FOR IRON WORKS**

(57)     A blending plan generation method includes a capturing step of capturing input data necessary for generating a blending plan, a constraint condition including a property constraint after blending of raw materials, a stock constraint for each brand of the raw materials, and an operation constraint regarding an operation condition, a confirmed plan constraint capturing step of capturing, as a confirmed plan constraint, an already confirmed plan among blending plans to be planned, an optimization problem generation step of formulating an optimization problem based on the input data, the constraint condition, the confirmed plan constraint, and a preset evaluation function value, and an optimization step of solving the optimization problem.

FIG.4

**Description**

Field

The present invention relates to a blending plan generation method, a blending plan generation device, and a method of operating an iron mill.

Background

In recent years, optimization and planning automation of a production plan and a distribution plan in each process have been advanced in an ironmaking process. In the raw material process, there are programming problems such as a yard arrangement problem, a raw material conveyance problem, and a raw material blending problem. The yard arrangement problem is for determining which yard is to be loaded with the raw material handled from the ship which is loaded with the raw material. In addition, the raw material conveyance problem is for determining when to dispense the raw material on the yard or pile using which belt conveyor system. In addition, the raw material blending problem relates to the blending of the raw materials to be charged into the blast furnace.

In addition, one of the raw material blending problems is an ore blending problem. This ore blending problem is for determining the blending ratio between respective brands that minimizes the cost while satisfying constraint conditions such as property constraints required by the blast furnace. Regarding this ore blending problem, Patent Literature 1 discloses the following method. In this method, a raw material purchase plan and a raw material use plan for minimizing the cost required for the purchase and manufacturing of the raw material while maintaining the constraints on the properties of the product and the capacity of the manufacturing facility are generated. Then, at that time, even when the constraint expression and the evaluation function are given by a nonlinear equation, the search is performed with the constraint expression and the evaluation function as vector variables.

Citation List

Patent Literature

Patent Literature 1: JP 2018-77840 A

Summary

Technical Problem

However, since a large amount of raw material is used in actual operation, an error in the stock of raw materials tends to be large. In addition, since raw materials are generally stored in a heap, it is often difficult to grasp an accurate stock. Therefore, even when the plan on a desk satisfies the constraints of the inventory, the plan may not actually be established. Conversely, even when a numerical value on a desk shows an insufficient inventory, the actual inventory may be sufficient.

Furthermore, for example, there is a case where a plan at the site is determined on the operation side and the operation is being performed based on the plan. In this case, for example, in the method disclosed in Patent Literature 1, there arises a problem that the plan at the site varies every time the plan is made.

The present invention has been made in view of the above, and an object of the present invention is to provide a blending plan generation method, a blending plan generation device, and a method of operating an iron mill capable of generating a blending plan satisfying a required quality property at high speed without changing a confirmed plan.

Solution to Problem

To solve the above-described problem and achieve the object, a blending plan generation method according to the present invention includes: a capturing step of capturing input data necessary for generating a blending plan, and a constraint condition including a property constraint after blending of raw materials, a stock constraint for each brand of the raw materials, and an operation constraint regarding an operation condition; a confirmed plan constraint capturing step of capturing, as a confirmed plan constraint, an already confirmed plan among blending plans to be planned; an optimization problem generation step of formulating an optimization problem based on the input data, the constraint condition, the confirmed plan constraint, and a preset evaluation function value; and an optimization step of solving the optimization problem.

Moreover, in the above-described blending plan generation method according to the present invention, the optimization problem generation step includes formulating the optimization problem by fixing some variables included in the constraint condition based on the confirmed plan constraint.

Moreover, the above-described blending plan generation method according to the present invention further includes, between the confirmed plan constraint capturing step and the optimization problem generation step, a step of changing the input data and the constraint condition so as to satisfy the confirmed plan constraint.

Moreover, the above-described blending plan generation method according to the present invention further includes, between the confirmed plan constraint capturing step and the optimization step when the constraint condition or the confirmed plan constraint includes a nonlinear equation, a vector variable generation step of replacing one or more elements included in a nonlinear term with different variables with respect to the nonlinear equation and vectorizing the variables to obtain vector variables, and a nonlinear constraint linearization step of generating a linearization constraint condition by linearizing the nonlinear equation using the vector variables and adding a constraint condition related to the vector variables, wherein the optimization problem generation step includes formulating an optimization problem based on the input data, the constraint condition, the confirmed plan constraint, the linearization constraint condition, and the evaluation function value.

Moreover, the above-described blending plan generation method according to the present invention further includes relaxing the confirmed plan constraint by adding a penalty term to the confirmed plan constraint between the confirmed plan constraint capturing step and the optimization problem generation step, wherein the optimization problem generation step includes formulating an optimization problem in which a solution is better as the penalty term approaches 0.

To solve the above-described problem and achieve the object, a blending plan generation device includes: a capturing unit configured to capture input data necessary for generating a blending plan, and a constraint condition including a property constraint after blending of raw materials, a stock constraint for each brand of the raw materials, and an operation constraint regarding an operation condition; a confirmed plan constraint capturing unit configured to capture, as a confirmed plan constraint, an already confirmed plan among blending plans to be planned; an optimization problem generation unit configured to formulate an optimization problem based on the input data, the constraint condition, the confirmed plan constraint, and a preset evaluation function value; and an optimization unit configured to solve the optimization problem.

To solve the above-described problem and achieve the object, a method of operating an iron mill includes using the blending plan generation method for a blending plan of iron ore or feedstock coal in an iron mill. Advantageous Effects of The Invention

According to the present invention, by solving an optimization problem formulated in consideration of a confirmed plan, it is possible to generate a blending plan satisfying a required quality property at high speed without changing the confirmed plan.

Brief Description of Drawings

FIG. 1 is a schematic diagram illustrating a solution region and an executable region of a linear programming problem.
FIG. 2 is a diagram illustrating executable regions before and after relaxation by a confirmed constraint relaxing step in a blending plan generation method according to an embodiment of the present invention.
FIG. 3 is a schematic diagram illustrating a schematic configuration of a blending plan generation device according to an embodiment of the present invention.
FIG. 4 is a flowchart illustrating a flow of a blending plan generation method according to an embodiment of the present invention.
FIG. 5 is a flowchart illustrating details of a confirmed plan constraint capturing step in the blending plan generation method according to the embodiment of the present invention.
FIG. 6 is a flowchart illustrating details of a nonlinear problem optimization step in the blending plan generation method according to the embodiment of the present invention.
FIG. 7 is a diagram illustrating objective function values before and after relaxation by a confirmed constraint relaxing step in a blending plan generation method according to an embodiment of the present invention. Description of Embodiments

A blending plan generation method, a blending plan generation device, and a method of operating an iron mill according to an embodiment of the present invention will be described with reference to the drawings. Note that the present invention is not limited to the embodiments described below.

First, an outline of a blending planning optimization problem to which the present invention is applied will be described. In the steel industry, it is required to mix raw materials such as various kinds of purchased iron ore and coal having various properties and to keep the quality and properties after mixing within a certain range. At this time, since the cost is determined as an important index, minimization of the purchase cost, the manufacturing cost, and the like is required. Furthermore, it is required to plan blending over a plurality of days while changing the blending ratio so as not to run out of stock of raw materials. In the present invention, a blending plan is formulated as an optimization problem. The optimization problem of the blending planning handled by the present invention can be expressed as, for example, the following Expressions (1) and (2).

$$\min \ (\max) \quad f(x) \tag{1}$$

$$\text{s.t.} \quad x \le F \tag{2}$$

where, in Expressions (1) and (2) above, F is a subset of the n-dimensional vector space $R^n$, and f is an evaluation function defined by $R^n$.

<Case of linear programming problem>

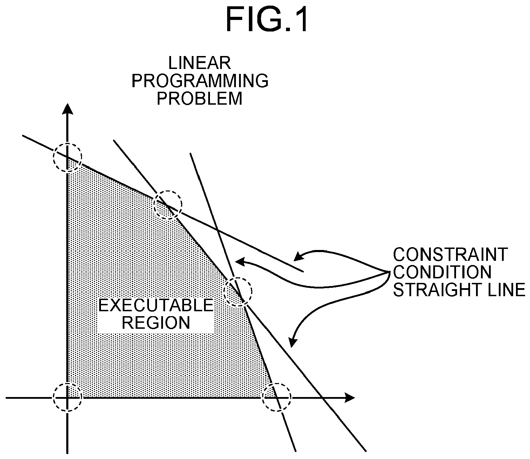

FIG. 1 is a schematic diagram illustrating a solution region and an executable region of a linear programming problem (LP). In the linear programming problem, the evaluation function and the constraint condition are linear. In addition, a polygon in the figure indicates an executable region of the linear programming problem. In the case of solving the linear programming problem, it is sufficient to search for only vertices of a polygon (see broken line circles in the drawing), so that high-speed calculation is possible.

The value of the evaluation function in Expression (1) above can be a predetermined numerical value according to the optimization problem. For example, it can be a minimum value, a maximum value, or a predetermined value determined in advance. Hereinafter, a mathematical model (hereinafter, referred to as a "first mathematical model") as shown in the following Expressions (3) to (6) is formulated, and an optimization problem is considered, taking the raw material blending problem, which is the object of the present invention, as an example.

$$\min \quad f(x) = \sum_{i \in I} \sum_{j \in J} c_i x_{i,j} \tag{3}$$

$$\text{s.t.} \quad \sum_{i \in I} x_{i,j} = N_j \forall j \in J \tag{4}$$

$$0 \le x_{i,j} \le s_{i,j} \quad \forall i \in I, \forall j \in J \tag{5}$$

$$C_{bottom} \le \sum_{i \in I} d_i x_{i,j} \le C_{upper} \forall j \in J \tag{6}$$

blending amount of the brand i in each planning period j, s is the stock amount of the brand i in each planning period j, c is the cost of the brand i, N is the sum of the blending amounts in each planning period j, and $d_i$, $e_i$, $k_i$ are certain components of the brand i. In this case, Expressions (3) to (6) above are the following Expressions.

Expression (3): an expression indicating the cost of the plan after blending
Expression (4): an expression indicating a constraint on the blending amount to be satisfied in each planning period j
Expression (5): an expression indicating a stock constraint for each brand
Expression (6): an expression indicating a property constraint after blending

There may be a plurality of property constraints as in Expression (6) above. In Expressions (3) to (6) above, C is a constant. All variables and constants are non-negative real numbers.
In addition, for the evaluation function represented by Expression (3) above, the cost of the plan after blending is used here, but other modes may be used. For example, using a change in width of the blending ratio regarding the usage amount $x_{i,j}$ of each raw material brand in the planning periods adjacent in terms of period, an expression may be for minimizing the change in width. This is because, for example, the change in operation conditions when the way of blending is similar is smaller than those when the way of blending the raw materials greatly changes on a daily basis, so that the operational burden can be reduced. In any case, the evaluation function represented by Expression (3) above may be an operation index related to the blending of the raw materials, and may be aimed at minimizing or maximizing the operation index in some cases.

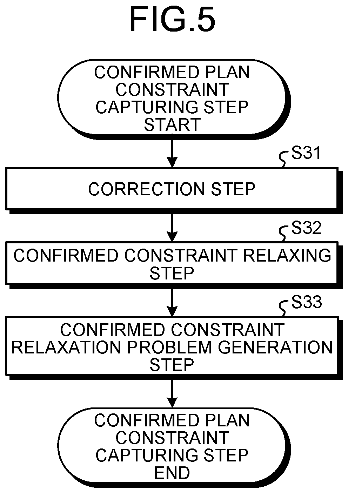

The parameters of Expressions (3) to (6) above are given by the input data captured in the input data capturing step (see Step S1 in FIG. 5) of the blending plan generation method to be described later. At this time, a case where the constraint condition (hereinafter, referred to as "confirmed plan constraint") as shown in the following Expression (7) is added to the first mathematical model (see Expressions (3) to (6) above) in the confirmed plan constraint capturing step (see Step S3 in FIG. 5) of the blending plan generation method to be described later will be considered.

$$x_{1,1} = C_1 \qquad (7)$$

Expression (7) above represents that the blending amount of brand 1 in period 1 is determined as "$C_1$". In such a case, for example, as shown in the following Expression (8), when the stock amount of the brand 1 in the period 1 is smaller than the confirmed blending amount $C_1$, the first mathematical model (see Expressions (3) to (6) above) has "no solution".

$$s_{1,1} < C_1 \qquad (8)$$

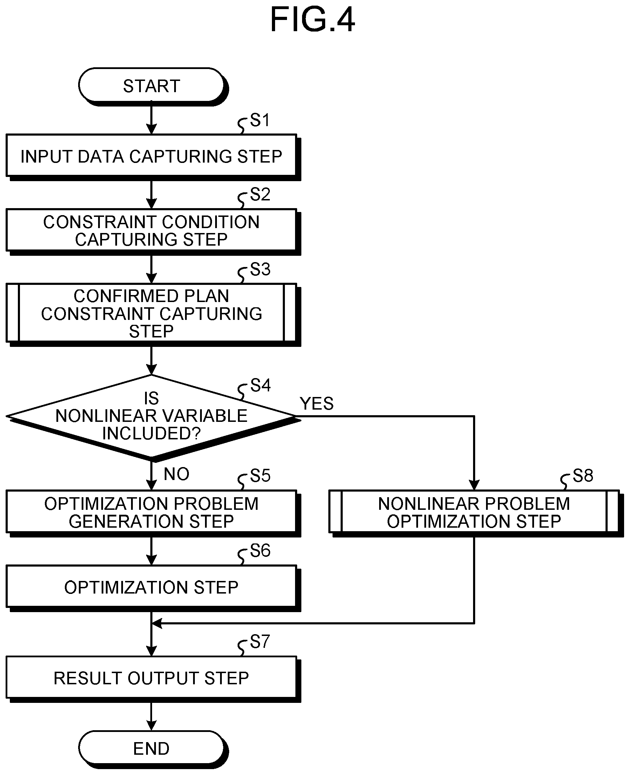

As described above, when there is a contradiction in the constraint conditions, the input data captured in the input data capturing step (see Step S1 in FIG. 4) to be described later or the constraint condition captured in the constraint condition capturing step (see Step S2 in FIG. 4) are corrected (see Step S31 in FIG. 5). The mathematical model (hereinafter, referred to as a "second mathematical model") obtained by modifying Expressions (3) to (6) above based on the confirmed plan constraint can be expressed as the following Expressions (9) to (14).

$$\min \quad f(x) = \sum_{i \in I} \sum_{j \in J} c_i x_{i,j} \qquad (9)$$

$$\text{s.t.} \quad \sum_{i \in I} x_{i,j} = N_j \forall j \in J \qquad (10)$$

$$x_{1,1} = C_1 \qquad (11)$$

$$0 \le x_{1,j} \le s_{1,j} + \left(C_1 - s_{1,1}\right) \forall j \in J \qquad (12)$$

$$0 \le x_{i,j} \le s_{i,j} \quad i = 2,3,\ldots n, \forall j \in J \qquad (13)$$

$$C_{\text{bottom}} \le \sum_{i \in I} d_i x_{i,j} \le C_{\text{upper}} \forall j \in J \qquad (14)$$

By adding Expression (11) (= Expression (7)) that is a confirmed plan constraint, Expression (5) above contradicting Expression (11) above is modified to the above (12) and (13). Expression (12) above means that $S_{1,1}$, which are the input data, are raised to $C_1$ so as to satisfy Expression (11) above, and the increase is reflected and corrected in the relevant input data. By such input data correction, it is possible to generate a plan reflecting the confirmed plan. By the above operation, it is possible to solve the optimization problem at high speed and generate the blending plan at high speed in a state where the confirmed plan is fixed (stored).

<Case of nonlinear programming problem>

Here, the present invention is applicable even when the problem to be applied is a nonlinear programming problem. For example, a mathematical model (hereinafter, referred to as a "third mathematical model") as shown in the following Expressions (15) to (19) will be described as an example.

$$\min \quad f(x) = \sum_{i \in I} \sum_{j \in J} c_i x_{i,j} \tag{15}$$

$$\text{s.t.} \quad \sum_{i \in I} x_{i,j} = N_j \, \forall j \in J \tag{16}$$

$$0 \le x_{i,j} \le s_{i,j} \quad \forall i \in I, \forall j \in J \tag{17}$$

$$C_{\text{bottom}} \le \sum_{i \in I} d_i x_{i,j} \le C_{\text{upper}} \, \forall j \in J \tag{18}$$

$$\left( \sum_{i \in I} e_i x_{i,j} \right)^2 + \sum_{i \in I} k_i x_{i,j} \le C_1 \, \forall j \in J \tag{19}$$

where, Expressions (15) to (18) above are the same as Expressions (3) to (6) above. In addition, Expression (19) above is an expression indicating property constraint after blending. Since Expression (19) above includes the second-order nonlinear variable, it is a nonlinear programming problem. In addition, in the third mathematical model (see Expressions (15) to (19) above), when there is a contradiction as illustrated in the above (7) and (8), the input data or the constraint condition is corrected. The mathematical model (hereinafter, referred to as a "fourth mathematical model") obtained by modifying Expressions (15) to (19) above based on the confirmed plan constraint can be expressed as the following Expressions (20) to (26).

$$\min \quad f(x) = \sum_{i \in I} \sum_{j \in J} c_i x_{i,j} \tag{20}$$

$$\text{s.t.} \quad \sum_{i \in I} x_{i,j} = N_j \forall j \in J \tag{21}$$

$$x_{1,1} = C_1 \tag{22}$$

$$0 \le x_{1,j} \le s_{1,j} + \left( C_1 - s_{1,1} \right) \, \forall j \in J \tag{23}$$

$$0 \le x_{i,j} \le s_{i,j} \quad i = 2, 3, \ldots n, \forall j \in J \tag{24}$$

$$C_{bottom} \leq \sum_{i \in I} d_i x_{i,j} \leq C_{upper} \ \forall j \in J \tag{25}$$

$$\left( \sum_{i \in I} e_i x_{i,j} \right)^2 + \sum_{i \in I} k_i x_{i,j} \leq C_1 \ \forall j \in J \tag{26}$$

Subsequently, in the present invention, the nonlinear variable in Expression (26) above is replaced with a vector variable, and a mathematical model (hereinafter, referred to as a "fifth mathematical model") as shown in the following Expressions (27) to (34) is formulated (see Step S81 in FIG. 5).

$$\min \ f(x) = \sum_{i \in I} \sum_{j \in J} c_i x_{i,j} \tag{27}$$

$$\text{s.t.} \ \sum_{i \in I} x_{i,j} = N_j \forall j \in J \tag{28}$$

$$x_{1,1} = C_1 \tag{29}$$

$$0 \leq x_{1,j} \leq s_{1,j} + \left( C_1 - s_{1,1} \right) \ \forall j \in J \tag{30}$$

$$0 \leq x_{i,j} \leq s_{i,j} \quad i = 2,3,\ldots n, \forall j \in J \tag{31}$$

$$C_{bottom} \leq \sum_{i \in I} d_i x_{i,j} \leq C_{upper} \forall j \in J \tag{32}$$

$$\left( g_j^k \right)^2 + \sum_{i \in I} k_i x_{i,j} \leq C_1 \ \forall j \in J \tag{33}$$

$$\sum_{i \in I} e_i x_{i,j} + p_j = g_j^k \forall j \in J \tag{34}$$

where, the vector variable $g_j^k$ in Expressions (33) and (34) above indicates a constant of an approximate value of $\sum e_i x_{i,j}$ in the planning period j. According to Expressions (33) and (34) above, Expression (26) above can be changed to a linear expression.

In addition, since the fifth mathematical model (see Expressions (27) to (34) above) greatly depends on the value of the vector variable $g_j^k$ of Expression (33) above, K vectors that are combinations of constants to be set are prepared. That is, K relaxation problems are formulated, the value of the J-dimensional vector variable $g_j^k$ is updated by comparing the evaluation function values (see Step S82 in FIG. 5), and search is performed until the evaluation function of Expression (27) above is minimum, that is, 0.

For updating the value of the vector variable $g_j^k$, for example, a heuristic solution such as a particle swarm optimization (PSO) method or a genetic algorithm (GA) can be used. Hereinafter, an example using the particle swarm optimization method will be described.

The algorithm of the particle swarm optimization method is a metaheuristic that takes a hint from the collective behavior of organisms, and when an evaluation function to be searched is given, a plurality of particles moves around in a search space for an optimal solution while sharing information with each other. The particle swarm optimization method is characterized by simplicity of such a concept and algorithm, flexibility of operation, possibility of improvement, and the like. In the algorithm of the particle swarm optimization method, the component of each nonlinear variable is updated according to the following Expressions (35) and (36).

$$a_m^k = r_1 a_{m-1}^k + C_{11} r_2 \left( P_m^k - a_{m-1}^k \right) + C_{12} r_3 \left( G_m - a_{m-1}^k \right) \forall k \in K, m \in M \qquad (35)$$

$$b_{m+1}^k = b_m^k + a_m^k \ \forall k \in K, m \in M \qquad (36)$$

In Expressions (35) and (36) above, $a_m^k$ represents an update vector of the vector variable $k \square K$ at time $m \square M$, $b_m^k$ represents a position vector (coordinates) of the vector variable $k$ at time $m$, and $r$ and $C$ represent parameters given by a random number. In addition, $P_k$ represents a personal best indicating the best position vector taken by each particle (each vector variable) $k$ by the time $m$, and $G_m$ represents a global best indicating the best position vector taken by all particles (all vector variables) by the time $m$. When the problem setting is a minimization problem, the personal best $P_k$ and the global best $G_m$ are updated as the objective function value decreases.

In the present invention, the position vector $b_m^k$ relates to the vector variable $g_j^k$ at the time $m$ in the fifth mathematical model (see Expressions (27) to (34) above). In the algorithm of Expressions (35) and (36) above, it is assumed that the end condition is satisfied when preset number of repetitive calculations or calculation time is reached, or when the solution update is not performed within a preset fixed time. When the end condition is satisfied (Yes in Step S86 in FIG. 5), the search is ended. Then, the position vector of the global best $G_m$ obtained at the end of the search is given to Expressions (33) and (34) above (see Step S84 in the drawing), and the optimization problem is solved (see Step S85 in the drawing). By the above operation, even when the original problem (third mathematical model) is a nonlinear programming problem in a state where the confirmed plan is fixed (saved), the optimization problem can be solved at high speed and the blending plan can be generated at high speed.

(Case where executable solution cannot be obtained)

The second mathematical model (see Expressions (9) to (14) above) and the fifth mathematical model (see Expressions (27) to (34) above) include the equality constraint (see Expressions (11) and (29)) for $x_{1,1}$. Therefore, the solution space is limited by the expressions, and there is a possibility that it is difficult to obtain an initial feasible solution of the particle swarm optimization method according to Expressions (35) and (36) above. In this case, in the present invention, the original problem is relaxed (see Step S32 in FIG. 5), and a mathematical model (hereinafter, referred to as a "sixth mathematical model") as shown in the following Expressions (37) to (42) is formulated (see Step S33 in FIG. 5). Note that the following Expressions (37) to (42) show examples of mathematical models obtained by relaxing the second mathematical model (see Expressions (9) to (14) above).

$$\min \quad f(x) = \alpha \times \sum_{i \in I} \sum_{j \in J} c_i x_{i,j} + \beta \times p \qquad (37)$$

$$\text{s.t.} \quad \sum_{i \in I} x_{i,j} = N_j \forall j \in J \qquad (38)$$

$$C_1 - p \le x_{1,1} \le C_1 + p \qquad (39)$$

$$0 \le x_{1,j} \le s_{1,j} + (C_1 - s_{1,1}) \ \forall j \in J \qquad (40)$$

$$0 \le x_{i,j} \le s_{i,j} \quad i = 2,3,\ldots n, \forall j \in J \qquad (41)$$

$$C_{bottom} \le \sum_{i \in I} d_i x_{i,j} \le C_{upper} \forall j \in J \qquad (42)$$

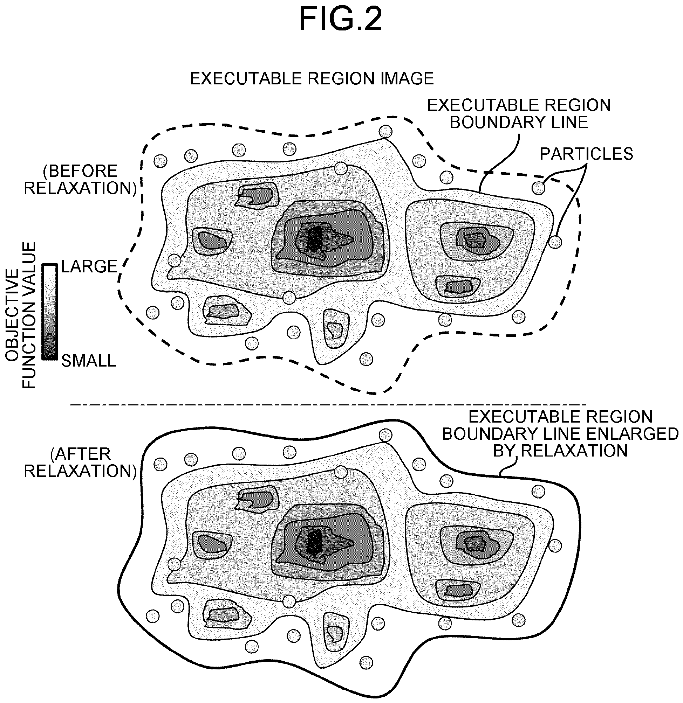

where, Expressions (38) and (40) to (42) above are the same as Expressions (10) and (12) to (14) above. In addition, $\alpha$ and $\beta$ in Expression (37) above represent non-negative parameters, and p in Expression (39) above represents a penalty function p including a non-negative real number. By Expression (39) above, the confirmed plan constraint is relaxed, and the executable region is extended as illustrated in FIG. 2. In addition, by updating the particle swarm optimization algorithm according to Expression (37) above so that the penalty function p approaches 0 as close as possible, it is possible to obtain a solution satisfying the confirmed plan constraint. At this time, it is preferable to set the parameters $\alpha$ and $\beta$ so that the second term of Expression (37) above is sufficiently larger than the first term. With the above operation, it is possible to reliably solve the optimization problem to which the confirmed plan constraint is added.

[Blending plan generation device]

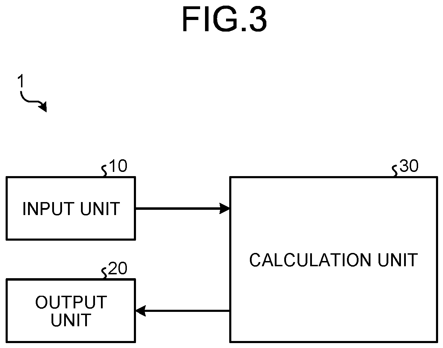

A configuration of a blending plan generation device according to an embodiment of the present invention will be described with reference to FIG. 3. A blending plan generation device 1 includes an input unit 10, an output unit 20, and a calculation unit 30.

The input unit 10 is an input means to the calculation unit 30, and is realized by an input device such as a keyboard, a mouse pointer, and a numeric keypad.

The output unit 20 is realized by a display device such as an LCD display or a CRT display, for example, and displays a calculation result or the like based on a display signal input from the calculation unit 30.

The calculation unit 30 is realized by, for example, a processor including a central processing unit (CPU) or the like and a memory (main storage unit) including a random access memory (RAM), a read only memory (ROM), or the like. The calculation unit 30 loads the program into the work area of the main storage unit and executes the program, and controls each component and the like through the execution of the program, thereby realizing a function matching a predetermined purpose.

[Blending plan generation method]

A blending plan generation method according to an embodiment of the present invention will be described with reference to FIGS. 4 to 6. The blending plan generation method according to the present embodiment is for planning for a preset period the blending ratio of the raw materials in which the evaluation function is optimal while satisfying the constraint condition. Hereinafter, a blending plan generation method when the problem to be applied is a linear programming problem will be described.

As illustrated in FIG. 4, the blending plan generation method according to the present embodiment performs an input data capturing step S1, a constraint condition capturing step S2, a confirmed plan constraint capturing step S3, and a nonlinear variable determination step S4 in this order. Then, when a negative determination is made in the nonlinear variable determination step S4 (No in step S4), an optimization problem generation step S5, an optimization step S6, and a result output step S7 are performed in this order. In addition, when an affirmative determination is made in the nonlinear variable determination step S4 (Yes in Step S4), a nonlinear problem optimization step S8 and the result output step S7 are performed in this order. Each step shown in the figure is performed mainly by the calculation unit 30 of the blending plan generation device 1.

(Input data capturing step S1)

In the input data capturing step S1, input data necessary for generating the blending plan is captured via the input unit 10. Examples of the input data include information about the properties of brands used for inventory, arrival, operation plan, and blending plan.

(Constraint condition capturing step S2)

In the constraint condition capturing step S2, a plurality of constraint conditions necessary for generating a blending plan, such as properties required after blending of raw materials, upper and lower limits of inventory, and operation conditions, is captured via the input unit 10. Examples of the constraint conditions include a property constraint after blending of raw materials, a stock constraint for each brand of raw material, and an operation constraint regarding operation conditions.

(Confirmed plan constraint capturing step S3)

In the confirmed plan constraint capturing step S3, a confirmed plan determined in an operation is captured as a constraint. That is, in the confirmed plan constraint capturing step S3, an already confirmed plan among the blending plans to be planned is captured as a confirmed plan constraint. In addition, in the confirmed plan constraint capturing step S3, when there is a contradiction between the confirmed plan constraint and the already captured input data or the constraint condition, the input data or the constraint condition is changed (corrected). As a result, the unchangeable plan at the site is treated as confirmed. Note that details of the confirmed plan constraint capturing step S3 will be described later (see FIG. 5).

(Nonlinear variable determination step S4)

In the nonlinear variable determination step S4, it is determined whether the nonlinear equation (nonlinear variable) is included in the constraint condition or the confirmed plan constraint obtained through the above steps. When the nonlinear equation is not included (No in Step S4), the process proceeds to the optimization problem generation step S5, and when the nonlinear equation is included (Yes in Step S4), the process proceeds to the nonlinear problem optimization step S8.

(Optimization problem generation step S5)

In the optimization problem generation step S5, an optimization problem for minimizing or maximizing a preset evaluation function value is formulated based on the input data, the constraint condition, and the confirmed plan constraint obtained through the above steps. That is, in the optimization problem generation step S5, the optimization problem is formulated by fixing some variables included in the constraint condition based on the confirmed plan constraint (see Expressions (9) to (14) above).

(Optimization step S6)

In the optimization step S6, the optimization problem formulated in the optimization problem generation step S5 is solved.

(Nonlinear problem optimization step S8)

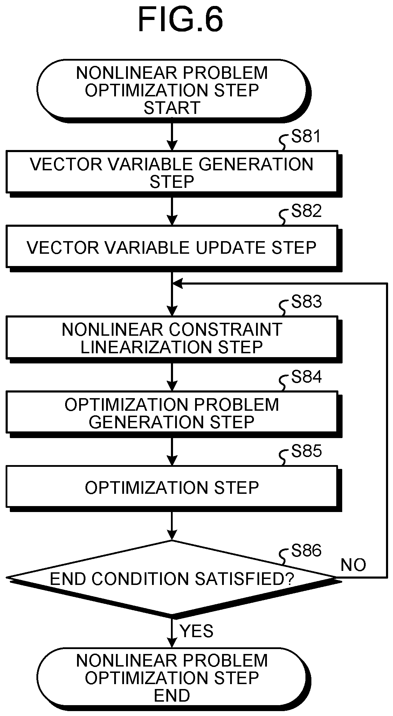

In the nonlinear problem optimization step S8, the nonlinear variable is subjected to constant approximation and linearization, and the optimization problem is formulated and solved. Details of the nonlinear problem optimization step S8 will be described later (see FIG. 6).

(Result output step S7)

The result output step S7 outputs the result obtained in the optimization step S6 or the nonlinear problem optimization step S8 via the output unit 20.

<Details of confirmed plan constraint capturing step S3>

Specifically, as illustrated in FIG. 5, in the confirmed plan constraint capturing step S3, a correction step S31, a confirmed constraint relaxing step S32, and a confirmed constraint relaxation problem generation step S33 are performed in this order.

(Correction step S31)

In the correction step S31, when the confirmed plan constraint contradicts the input data or the constraint condition, the input data or the constraint condition is appropriately corrected (see Expression (12) above). That is, in the correction step S31, the confirmed plan constraint is prioritized over the input data and the constraint condition. Then, when there is a contradiction between the two (for example, when the stock amount of a predetermined brand in a predetermined period is smaller than the confirmed blending amount, or the like), the input data and the constraint condition are corrected so as to satisfy the confirmed plan constraint.

(Confirmed constraint relaxing step S32)

In the confirmed constraint relaxing step S32, in a case where it is difficult to obtain an initial feasible solution of the particle swarm optimization method, for example, since an equality constraint (see Expressions (11) and (29) above) is included, the confirmed plan constraint is relaxed (see Expression (39) above).

(Confirmed constraint relaxation problem generation step S33)

In the confirmed constraint relaxation problem generation step S33, an optimization problem including a confirmed plan constraint is formulated (see Expressions (37) to (42) above).

<Details of nonlinear problem optimization step S8>

Specifically, as illustrated in FIG. 6, in the nonlinear problem optimization step S8, a vector variable generation step S81, a vector variable update step S82, a nonlinear constraint linearization step S83, an optimization problem generation step S84, an optimization step S85, and an end condition determination step S86 are performed in this order.

(Vector variable generation step S81)

In the vector variable generation step S81, the nonlinear variable is vectorized, and a large number of variable vectors are prepared. That is, in the vector variable generation step S81, when the nonlinear equation (nonlinear variable) is included in the confirmed plan constraint, one or more elements included in the nonlinear term are replaced with different variables and with respect to the nonlinear equation, and the variables are vectorized to obtain vector variables.
Specifically, in the vector variable generation step S81, the nonlinear variable (see Expression (19) above) captured in the input data capturing step S1 is defined as a one-dimensional or more vector variable (see "vector variable $g_j^k$" in Expression (33) above) and vectorized. Then, the vector variables are generated by a predetermined number of combinations.

(Vector variable update step S82)

In the vector variable update step S82, the coordinates (position vector) of the vector variable are updated based on a predetermined algorithm. In the present invention, the particle swarm optimization method is used as an algorithm for updating the coordinates of the vector variable, but other optimization methods such as a genetic algorithm and tabu search may be used.
In the particle swarm optimization method, for each search unit, the coordinates are probabilistically updated in the coordinate direction of the current best (personal best, global best) while sharing the information of the coordinates and the evaluation value. This searches for better coordinates of the search unit. Note that the above-described "search unit" corresponds to a "vector variable" in the present invention.

(Nonlinear constraint linearization step S83)

In the nonlinear constraint linearization step S83, the nonlinear equation (nonlinear variable) included in the confirmed plan constraint is linearized using the vector variable, and a constraint condition regarding the vector variable is added to generate a linearization constraint condition.

(Optimization problem generation step S84)

In the optimization problem generation step S84, an optimization problem for minimizing or maximizing a preset evaluation function value is formulated based on the input data, the constraint condition, the confirmed plan constraint, and the linearization constraint condition obtained through the above steps. That is, in the optimization problem generation step S84, a plurality of optimization problems is formulated based on the set of linear constraints generated by the number of variable vectors in the nonlinear constraint linearization step S83 and the objective function generated in the confirmed plan constraint capturing step S3.

(Optimization step S85)

In the optimization step S85, each of a plurality of optimization problems formulated in optimization problem generation step S84 is solved.

(End condition determination step S86)

In the end condition determination step S86, it is determined whether an end condition such as the predetermined number of times of repeated calculations or the calculation time is satisfied. Then, when the end condition is satisfied (Yes in Step S86), the process proceeds to the result output step S7 (FIG. 4), and when the end condition is not satisfied (No in Step S86), the process proceeds to the vector variable update step S82.

According to the blending plan generation method according to the present embodiment as described above, by solving the optimization problem formulated in consideration of the confirmed plan, it is possible to quickly generate the blending plan satisfying the required quality property without changing the confirmed plan.

[Examples]

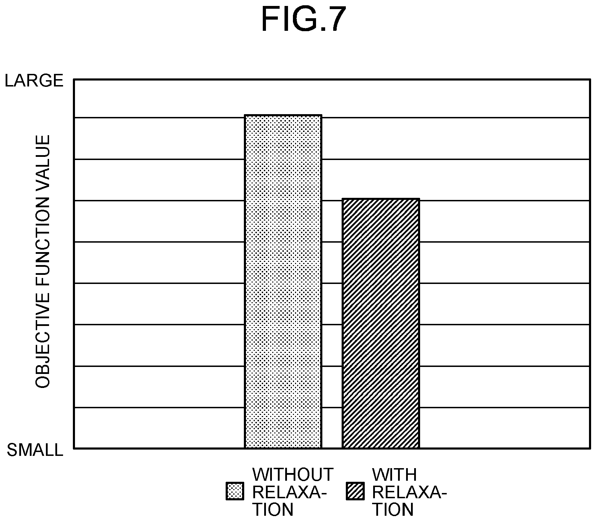

An example of the blending plan generation method according to the present embodiment will be described with reference to FIGS. 2 and 7. In the present embodiment, taking the iron ore blending planning problem as an example, a confirmed plan constraint is given to the nonlinear programming problem, and the number of particles in the particle swarm optimization method that has obtained the feasible solution was compared between the presence and absence of the relaxation process. The initial arrangement of the particles was random, and the particles were started with the same coordinates between without relaxation and with relaxation.

As a result, in the case without relaxation, the number of particles in which a feasible solution was obtained is one among 400 particles, but in the case with relaxation, the number of particles in which a feasible solution was obtained is 400 among 400 particles. This is because the executable region is enlarged as illustrated in FIG. 2 by the relaxation process of the confirmed constraint relaxing step S32. In addition, the finally obtained objective function value was improved by about 25% as illustrated in FIG. 7.

Table 1 shows part of the blending plan output as a solution in this example. As illustrated in the table, it can be seen that an executable solution satisfying all the set constraint conditions is obtained.

Table 1

|         | Confirmed Constraint | Period 1 |     |
| ------- | -------------------- | -------- | --- |
| Brand A | $5\% \leq$           | 5.2%     |     |
| Brand B | $10\% \leq$          | 14.3%    |     |
| Brand C | $= 0$                | 0t       | ... |
| Brand D | $= 800t$             | 800.0t   |     |
| Brand E | $7\% \leq$           | 10%      |     |

As described above, when the present invention is applied to the iron ore blending plan in the iron mill, it is possible to generate the iron ore blending plan satisfying the predetermined property shape without changing the determined iron ore blending plan. Similarly, the present invention can also be applied to a feedstock coal blending plan. Therefore, in the iron mill, the operation can be carried out by appropriately making an optimum blending plan of iron ore or feedstock coal while maintaining the initial plan.

Although the blending plan generation method, the blending plan generation device, and the method of operating the iron mill according to the present invention have been specifically described with reference to the embodiments and examples for carrying out the invention, the gist of the present invention is not limited to these descriptions, and should be widely interpreted based on the description of the claims. It goes without saying that various changes, modifications, and the like based on these descriptions are also included in the gist of the present invention.

In addition, the blending plan generation device 1 described above may be configured by one computer, or may be configured by a plurality of computers, and information may be exchanged between the computers. In addition, the above-described blending plan generation method can be executed by a computer program installed in a computer. The computer program may be recorded on a recording medium such as a CD or a magnetic tape and readable.

Reference Signs List

1    BLENDING PLAN CREATION DEVICE
10    INPUT UNIT
20    OUTPUT UNIT
30    CALCULATION UNIT

**Claims**

1. A blending plan generation method comprising:

   a capturing step of capturing

   input data necessary for generating a blending plan, and
   a constraint condition including a property constraint after blending of raw materials, a stock constraint for each brand of the raw materials, and an operation constraint regarding an operation condition;

   a confirmed plan constraint capturing step of capturing, as a confirmed plan constraint, an already confirmed plan among blending plans to be planned;
   an optimization problem generation step of formulating an optimization problem based on the input data, the constraint condition, the confirmed plan constraint, and a preset evaluation function value; and
   an optimization step of solving the optimization problem.

2. The blending plan generation method according to claim 1, wherein the optimization problem generation step includes formulating the optimization problem by fixing some variables included in the constraint condition based on the confirmed plan constraint.

3. The blending plan generation method according to claim 1 or 2, further comprising, between the confirmed plan constraint capturing step and the optimization problem generation step, a step of changing the input data and the constraint condition so as to satisfy the confirmed plan constraint.

4. The blending plan generation method according to any one of claims 1 to 3, further comprising, between the confirmed plan constraint capturing step and the optimization step when the constraint condition or the confirmed plan constraint includes a nonlinear equation,

   a vector variable generation step of replacing one or more elements included in a nonlinear term with different variables with respect to the nonlinear equation and vectorizing the variables to obtain vector variables, and
   a nonlinear constraint linearization step of generating a linearization constraint condition by linearizing the nonlinear equation using the vector variables and adding a constraint condition related to the vector variables, wherein
   the optimization problem generation step includes formulating an optimization problem based on the input data, the constraint condition, the confirmed plan constraint, the linearization constraint condition, and the evaluation function value.

5. The blending plan generation method according to any one of claims 1 to 4, further comprising relaxing the confirmed plan constraint by adding a penalty term to the confirmed plan constraint between the confirmed plan constraint capturing step and the optimization problem generation step, wherein
   the optimization problem generation step includes formulating an optimization problem in which a solution is better as the penalty term approaches 0.

6. A blending plan generation device comprising:

   a capturing unit configured to capture
   input data necessary for generating a blending plan, and
   a constraint condition including a property constraint after blending of raw materials, a stock constraint for each brand of the raw materials, and an operation constraint regarding an operation condition;
   a confirmed plan constraint capturing unit configured to capture, as a confirmed plan constraint, an already confirmed plan among blending plans to be planned;
   an optimization problem generation unit configured to formulate an optimization problem based on the input data, the constraint condition, the confirmed plan constraint, and a preset evaluation function value; and
   an optimization unit configured to solve the optimization problem.

7. A method of operating an iron mill, comprising
   using the blending plan generation method according to claim 1 for a blending plan of iron ore or feedstock coal in an iron mill.

# FIG.1

LINEAR
PROGRAMMING
PROBLEM

CONSTRAINT
CONDITION
STRAIGHT LINE

EXECUTABLE
REGION

# FIG.2

EXECUTABLE REGION IMAGE

# FIG.3

1

| | |
|---|---|
| INPUT UNIT 10 | |
| | CALCULATION UNIT 30 |
| OUTPUT UNIT 20 | |

# FIG.4

START

S1
INPUT DATA CAPTURING STEP

S2
CONSTRAINT CONDITION
CAPTURING STEP

S3
CONFIRMED PLAN
CONSTRAINT CAPTURING
STEP

S4
IS
NONLINEAR VARIABLE
INCLUDED?

YES

NO

S5
OPTIMIZATION PROBLEM
GENERATION STEP

S8
NONLINEAR PROBLEM
OPTIMIZATION STEP

S6
OPTIMIZATION STEP

S7
RESULT OUTPUT STEP

END

# FIG.5

CONFIRMED PLAN
CONSTRAINT
CAPTURING STEP
START

S31

CORRECTION STEP

S32

CONFIRMED CONSTRAINT RELAXING
STEP

S33

CONFIRMED CONSTRAINT
RELAXATION PROBLEM GENERATION
STEP

CONFIRMED PLAN
CONSTRAINT
CAPTURING STEP
END

# FIG.6

NONLINEAR PROBLEM
OPTIMIZATION STEP
START

S81

VECTOR VARIABLE GENERATION
STEP

S82

VECTOR VARIABLE UPDATE STEP

S83

NONLINEAR CONSTRAINT
LINEARIZATION STEP

S84

OPTIMIZATION PROBLEM
GENERATION STEP

S85

OPTIMIZATION STEP

S86                          NO

END CONDITION SATISFIED?

YES

NONLINEAR PROBLEM
OPTIMIZATION STEP
END

# FIG.7

**INTERNATIONAL SEARCH REPORT**

International application No.

PCT/JP2021/005083

### A.  CLASSIFICATION OF SUBJECT MATTER

Int.Cl.  C21B5/00(2006.01)i, G05B19/418(2006.01)i, G06Q50/04(2012.01)i, G06N99/00(2019.01)i
FI: G05B19/418Z, G06N99/00180, G06Q50/04, C21B5/00301

According to International Patent Classification (IPC) or to both national classification and IPC

### B.  FIELDS SEARCHED

Minimum documentation searched (classification system followed by classification symbols)
Int.Cl.  C21B5/00, G05B19/418, G06Q50/04, G06N99/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
|---|---|---|
| X<br>Y | JP 2009-169823 A (NIPPON STEEL CORPORATION) 30 July 2009 (2009-07-30), claims 1, 6 | 1-3, 6-7<br>4-5 |
| Y | JP 2018-77840 A (JFE STEEL CORPORATION) 17 May 2018 (2018-05-17), claim 14 | 4 |
| Y | JP 2013-143030 A (NIPPON STEEL & SUMITOMO METAL CORPORATION) 22 July 2013 (2013-07-22), paragraphs [0074]-[0081] | 5 |

☐  Further documents are listed in the continuation of Box C.          ☒  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 April 2021 | 11 May 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

<table>
<tr><td colspan="2" align="center"><strong>INTERNATIONAL SEARCH REPORT</strong><br>Information on patent family members</td><td>International application No.<br><br>PCT/JP2021/005083</td></tr>
</table>

| | | |
|---|---|---|
| JP 2009-169823 A | 30 July 2009 | WO 2009/091051 A1<br>KR 10-2010-0098445 A<br>CN 101918904 A |
| JP 2018-77840 A | 17 May 2018 | (Family: none) |
| JP 2013-143030 A | 22 July 2013 | (Family: none) |

Form PCT/ISA/210 (patent family annex) (January 2015)

**EP 4 123 036 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018077840 A